# DEMANDE DE BREVET EUROPEEN

(11) **EP 3 151 070 A1**
(43) Date de publication de la demande: **05.04.2017**
(21) Numéro de dépôt: 16188613.0
(22) Date de dépôt: 13.09.2016
(51) Int. Cl.: G05B 15/02

(54) **DISPOSITIF ET PROCEDE POUR MODIFIER LA PROGRAMMATION D'UN SYSTEME DE DOMOTIQUE**

(30) Priorité: 30.09.2015 FR 1559250
(71) Demandeur: Delta Dore, 35270 Bonnemain (FR)
(72) Inventeur: LEFORT, Romain, 35270 Bonnemain (FR); RONDEAU, Laurent, 35270 Bonnemain (FR)
(74) Mandataire: Le Guen-Maillet

(57) **Abrégé**

Pour modifier la programmation d'un système domotique décrite dans un fichier de configuration enregistré sur un serveur, un dispositif électronique effectue les étapes suivantes : recevoir le fichier et le présenter sur une interface graphique permettant de visualiser la programmation, recevoir sur le dispositif de saisie une action d'un utilisateur faisant basculer l'interface graphique dans un mode de modification, présenter via l'interface graphique une option permettant de créer un nouvel élément de la programmation à partir d'un élément existant, chaque élément étant associé à des données de configuration et, si l'option est validée, créer le nouvel élément en reprenant des données de configuration associées à l'élément existant et en présentant une interface graphique comprenant les données de configuration associées au nouvel élément, l'interface graphique permettant de modifier les données de configuration issues de l'élément existant et de saisir les données de configuration du nouvel élément non issues de l'élément existant.

## Description

La présente invention concerne le domaine de la domotique, et plus particulièrement celui de la programmation d'un système domotique.

Le terme domotique est fréquemment utilisé pour décrire les différentes technologies ou produits permettant de piloter ou commander de manière centralisée des objets connectés dans une maison.

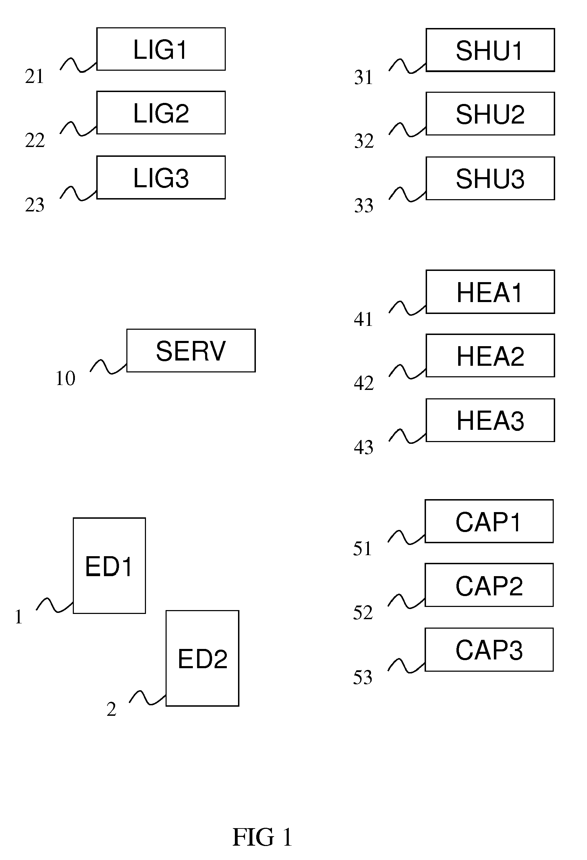

Un exemple de système de domotique classique est illustré en FIG. 1. Ce système comprend ici :
- différents luminaires 21, 22 et 23,
- différents volets électriques 31, 32 et 33
- différents radiateurs 41, 42 et 43,
- différents capteurs 51, 52 et 53,
- un serveur de pilotage domotique 10,
- différents dispositifs électroniques 1 et 2.

Les différents objets (luminaires, volets électriques, radiateurs, capteurs) sont ici connectés à un premier réseau sur lequel est aussi connecté le serveur de pilotage domotique 10. Ce premier réseau peut être dédié pour le système de domotique ou partagé pour d'autres usages. Le premier réseau peut utiliser tout type de technologie (sans fil ou filaire), chaque objet connecté pouvant utiliser une technologie différente pour se connecter à ce premier réseau. Les dispositifs électroniques 1 et 2 ont vocation à servir de dispositif permettant la configuration par un utilisateur du système de domotique, c'est-à-dire *in fine* du serveur de pilotage 10. Dit autrement, ces dispositifs électroniques 1 et 2 servent d'interface pour la configuration du système domotique. Ces dispositifs électroniques 1 et 2 peuvent être connectés au serveur de pilotage 10 via le même premier réseau ou via un deuxième réseau. Typiquement, les objets connectés et le serveur de pilotage 10 sont connectés ensemble via un premier réseau de type sans fil. Ce premier réseau utilise fréquemment une technologie propriétaire, c'est-à-dire propre au fournisseur de la solution domotique (par exemple une technologie radio fréquence utilisant le protocole appelé *X3D* de la société Delta Dore). Les dispositifs électroniques 1 et 2 sont typiquement des dispositifs de type téléphone intelligents (smartphone en anglais) ou tablette. Ces dispositifs électroniques 1 et 2 peuvent fréquemment se connecter au serveur de pilotage 10 via un deuxième réseau de type WiFi (*Wireless Fidelity*) ou de type cellulaire, le serveur de pilotage 10 possédant donc une double connectivité au premier et deuxième réseau. Typiquement, afin de pouvoir effectuer la programmation d'un système domotique, un utilisateur doit installer sur un dispositif électronique 1 une application dédiée, généralement fournie par le fabricant du système de domotique. Cette application présente généralement une interface graphique permettant à l'utilisateur de piloter les différents objets connectés ainsi que de programmer le fonctionnement de ceux-ci. En particulier, lors de l'installation d'un système domotique, l'utilisateur doit effectuer la programmation initiale du système domotique. Il s'agit là d'une tache compliquée généralement confiée à l'installateur du système domotique. Si cela peut se concevoir lors de la mise en service du système domotique, même si ce n'est pas là une situation optimale pour un utilisateur, il est plus difficilement concevable qu'un utilisateur doive s'adresser à un professionnel lorsqu'il désire seulement modifier la programmation de son système domotique. En effet, cela implique un coût pour l'utilisateur qui pourrait alors être amené à renoncer à effectuer cette démarche pourtant utile. L'utilisateur serait alors frustré et déçu par son installation domotique qui ne répondrait plus entièrement à son besoin.

L'invention vise à résoudre le problème de la complexité de la programmation d'un système domotique, et plus particulièrement celui de la complexité de la modification de la programmation d'un système domotique.

La présente invention concerne un procédé pour modifier la programmation d'un système de domotique, la programmation du système domotique étant décrite dans un fichier de configuration enregistré sur un serveur, lequel serveur pilotant le système de domotique en interprétant ledit fichier de configuration, le procédé pour modifier la programmation du système domotique étant exécuté par un dispositif électronique comprenant un écran et un dispositif de saisie, le procédé comprenant les étapes suivantes :
- recevoir le fichier de configuration,
- présenter sur l'écran une interface graphique permettant de visualiser la programmation du système de domotique telle que définie par le fichier de configuration reçu,
- détecter sur le dispositif de saisie au moins une action d'un utilisateur indiquant que l'interface graphique doit basculer dans un mode de modification de la programmation du système domotique,
- présenter via l'interface graphique une option permettant de créer un nouvel élément de la programmation à partir d'un élément existant de la programmation, chaque élément de la programmation étant associé à des données de configuration,
- détecter la validation de l'option, et,
- créer le nouvel élément de la programmation en reprenant des valeurs des données de configuration associées à l'élément existant et en présentant une interface graphique comprenant les données de configuration associées au nouvel élément, l'interface graphique permettant de :
   o modifier les valeurs des données de configuration issues de l'élément existant,
   o saisir les valeurs des données de configuration du nouvel élément non issues de l'élément existant.

Avantageusement, ce procédé permet donc la création d'un nouvel élément de programmation de façon aisée pour un utilisateur, celui-ci pouvant reprendre les données de configuration d'un élément de configuration comme base de départ pour la création du nouvel élément. Ainsi, il n'est pas nécessaire de recommencer à partir de zéro la création du nouvel élément.

Selon un mode de réalisation complémentaire de l'invention, l'étape de présentation d'une option permettant de créer un nouvel élément comprend l'affichage d'une liste d'éléments existants.

Ainsi, l'utilisateur peut aisément choisir un élément existant parmi la pluralité des éléments existants, cet élément sélectionné servant de base pour la création du nouvel élément.

Selon un mode de réalisation complémentaire de l'invention, le procédé comprend une étape préalable d'envoi d'une requête au serveur pour obtenir le fichier de configuration et une étape ultérieure d'envoi du fichier de configuration mis à jour au serveur.

Ainsi, le dispositif électronique dispose d'un fichier de configuration à jour et fournit ensuite au serveur un fichier de configuration mis à jour, garantissant que plusieurs dispositifs électroniques exécutant le procédé objet du présent document disposeront toujours de la dernière version du fichier de configuration.

Selon un mode de réalisation complémentaire, l'étape de présenter sur l'écran une interface graphique permettant de visualiser la programmation du système de domotique telle que définie par le fichier de configuration reçu comprend une visualisation de la programmation sur une période de une à plusieurs semaines, par exemple deux semaines.

Avantageusement, la visualisation d'une programmation du système domotique sur une période de plusieurs semaines permet une bonne compréhension et une appréhension rapide de la programmation, particulièrement en cas de programmation alternée sur un cycle de plusieurs semaines, par exemple deux semaines.

Selon un mode de réalisation complémentaire, les données de configuration d'un élément comprennent une liste d'objets connectés, chaque objet connecté étant associé à une commande, et une information permet de déterminer un moment d'envoi des commandes aux objets connectés, cet élément étant dit « *rendez*-*vous ».*

Selon un mode de réalisation complémentaire, le fichier de configuration comprend :
- un ou plusieurs premiers éléments, dits éléments action, chaque premier élément comprenant une liste d'objets connectés destinés à être pilotés par la programmation du système domotique, chaque objet connecté étant associé à une commande,
- un ou plusieurs deuxièmes éléments, dits éléments « *moment* », chaque deuxième élément correspondant à l'association d'un ou plusieurs premiers éléments avec une information de nommage,
- un ou plusieurs troisième éléments, dits éléments « *rendez-vous* », chaque troisième élément correspondant à l'association d'un deuxième élément avec une information temporelle permettant l'exécution des commandes comprises dans les premiers éléments associés à ce même deuxième élément,
- un ou plusieurs quatrièmes éléments, dits éléments « *programme* », chaque quatrième élément comprenant une liste de un ou plusieurs troisièmes éléments répartis sur une période temporelle, et,
- un ou plusieurs cinquièmes éléments, dits éléments « *events* », chaque cinquième élément comprenant une liste d'au moins un quatrième élément, chaque quatrième élément étant associé à une information temporelle permettant de déterminer l'exécution des commandes.

La présente invention concerne aussi un dispositif comprenant un écran et un dispositif de saisie, ainsi que des moyens pour :
- recevoir un fichier de configuration,
- présenter sur l'écran une interface graphique permettant de visualiser la programmation d'un système de domotique telle que définie par le fichier de configuration reçu,
- recevoir sur le dispositif de saisie au moins une action d'un utilisateur faisant basculer l'interface graphique dans un mode de modification de la programmation du système domotique,
- présenter via l'interface graphique une option permettant de créer un nouvel élément de la programmation à partir d'un élément existant de la programmation, chaque élément de la programmation étant associé à des données de configuration,
- détecter la validation de l'option, et,
- créer le nouvel élément de la programmation en reprenant des valeurs des données de configuration associées à l'élément existant et en présentant une interface graphique comprenant les données de configuration associées au nouvel élément, l'interface graphique permettant de :
   o modifier les valeurs des données de configuration issues de l'élément existant,
   o saisir les valeurs des données de configuration du nouvel élément non issues de l'élément existant.

La présente invention concerne aussi un programme d'ordinateur, qui peut être stocké sur un support et/ou téléchargé d'un réseau de communication, afin d'être lu et exécuté par un processeur. Ce programme d'ordinateur comprend des instructions pour implémenter le procédé mentionné ci-dessus selon l'une quelconque de ses variantes. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la FIG. 1 illustre schématiquement un système domotique ;
- la FIG. 2 illustre schématiquement un exemple d'architecture matérielle d'un dispositif électronique exécutant un procédé selon un des modes de réalisation de la présente invention ;
- la FIG. 3 illustre schématiquement un organigramme décrivant un mode de réalisation du procédé pour modifier la programmation d'un système domotique, plus particulièrement une vue d'ensemble d'une interface graphique d'une application permettant de modifier la configuration d'un système domotique ;
- la FIG. 4 illustre schématiquement un organigramme décrivant un mode de réalisation du procédé pour modifier la programmation d'un système domotique, plus particulièrement les étapes de création d'un élément de programmation d'un système domotique ;
- la FIG. 5 illustre schématiquement un organigramme décrivant un mode de réalisation du procédé pour modifier la programmation d'un système domotique, plus particulièrement les étapes de suppression d'un élément de programmation d'un système domotique ;
- la FIG. 6 illustre schématiquement un organigramme décrivant un mode de réalisation du procédé pour modifier la programmation d'un système domotique, plus particulièrement les étapes de copie d'un premier élément de programmation d'un système domotique ;
- la FIG. 7 illustre schématiquement un organigramme décrivant un mode de réalisation alternatif du procédé pour modifier la programmation d'un système domotique, plus particulièrement les étapes de copie d'un deuxième élément de programmation d'un système domotique ;
- la FIG. 8 illustre schématiquement un organigramme décrivant un mode de réalisation du procédé pour modifier la programmation d'un système domotique, plus particulièrement les étapes de modification d'un élément de programmation d'un système domotique ;
- la FIG. 9 illustre schématiquement un organigramme décrivant un mode de réalisation du procédé pour modifier la programmation d'un système domotique, plus particulièrement les étapes de création d'une exception dans la programmation d'un système domotique ;
- la FIG. 10 illustre schématiquement un exemple d'interface graphique d'une application de pilotage d'un système de domotique, plus précisément une interface graphique de visualisation de la programmation d'un système domotique.

Dans le présent document, les termes « programmation » et « configuration » d'un système domotique sont considérés équivalents. Il est ainsi équivalent de parler de configurer, programmer ou effectuer une programmation d'un système domotique.

La **FIG. 1** illustre schématiquement un système domotique.

Le système domotique peut être programmé via le procédé décrit dans le présent document.

Un système domotique peut comprendre plusieurs types d'objets connectés à un serveur SERV 10. Le serveur SERV 10 est aussi appelé centrale de pilotage du système domotique.

Les objets connectés tels les luminaires 21, 22 et 23, les volets électriques 31, 32 et 33 ou les radiateurs 41, 42 et 43 sont pilotables à distance. C'est-à-dire que le serveur SERV 10 peut envoyer des messages comprenant des instructions d'actions ou commandes à ces objets connectés.

Ainsi, le serveur SERV 10 peut envoyer des messages aux luminaires 21, 22 et 23 comprenant des instructions telles que « allumer », « éteindre », « fournir statut » (le statut d'un objet connecté correspondant par exemple à : allumé, éteint, ampoule hors service, température de fonctionnement, ouvert, fermé, etc.), « régler intensité lumineuse à *X* % », etc.

De même, les volets électriques 31, 32 et 33 peuvent ainsi recevoir des instructions en provenance du serveur 10 afin d'être ouverts ou fermés, partiellement ou non.

Le serveur SERV 10 peut envoyer des messages aux radiateurs 41, 42 et 43 pour régler à distance la température des radiateurs 41, 42 et 43.

Les objets connectés 51, 52 et 53 sont des capteurs et ont vocation à fournir, sur demande ou requête du serveur 10, ou automatiquement, des informations collectées par le capteur. Ainsi, un capteur peut être un capteur de présence, un capteur de luminosité, un capteur de type « station météo » (comprenant par exemple thermomètre, baromètre ou hygromètre).

Il est à noter qu'un objet connecté peut aussi comprendre un capteur. Par exemple, le radiateur 41 peut comprendre un capteur de type thermomètre.

La présente invention n'est pas limitée aux exemples d'objets connectés susmentionnées mais est aussi applicable pour d'autres types d'objets connectés non représentés dans la FIG. 1 (portail électrique, capteur d'incendie, station de surveillance audio ou vidéo, système d'alarme, etc.).

Plus généralement, un système domotique comprend des objets connectés, lesquels objets connectés sont pilotés à distance par une centrale de pilotage ou serveur 10. On parle alors de produits pilotés ou télécommandés pour décrire ces objets connectés. Il est en effet possible de piloter ou commander à distance ces produits, et ce de façon centralisée. Il est aussi possible de programmer le fonctionnement des différents objets connectés.

La programmation consiste à planifier dans le temps les commandes envoyées à ces objets connectés. Le serveur 10 pilote alors les objets connectés de façon automatique, sans intervention de la part d'un utilisateur.

Selon un mode de réalisation alternatif, les instructions ou commandes sont envoyées directement depuis un dispositif électronique 1 ou 2, à partir d'une application exécutée par ce même dispositif électronique, vers l'objet connecté à piloter, sans passer par un serveur 10.

Selon un mode de réalisation complémentaire, le dispositif électronique 1 et le serveur 10 sont un même objet. En d'autres termes, le serveur 10 peut exécuter directement une application de programmation du système de domotique et comprendre des périphériques de saisie et d'affichage. Dit encore autrement, le dispositif électronique 1 peut comprendre les fonctionnalités du serveur 10, c'est-à-dire exécuter un programme de pilotage du système domotique.

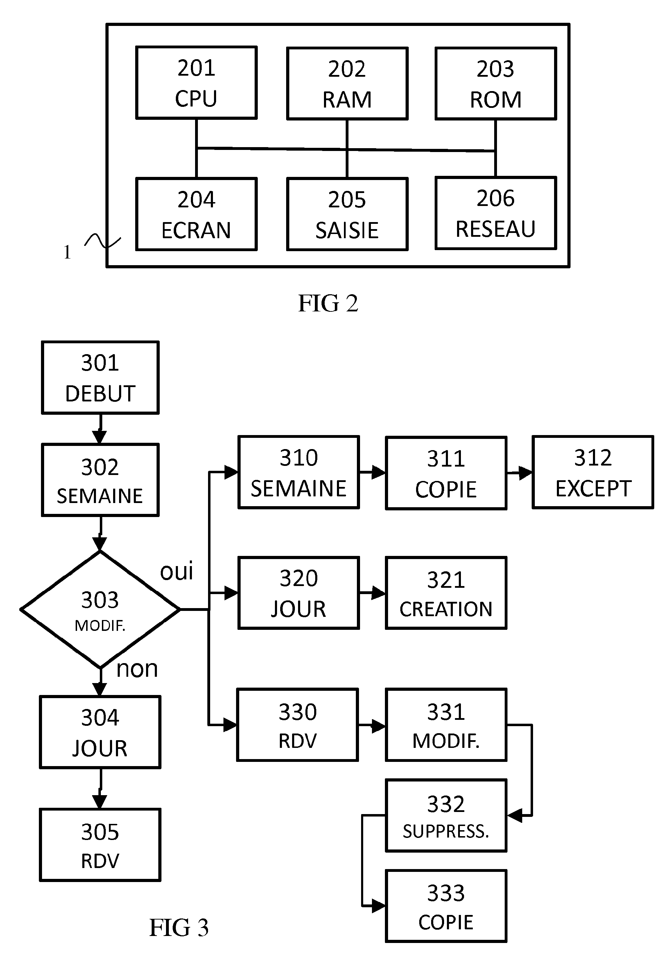

La **FIG. 2** illustre schématiquement un exemple d'architecture matérielle d'un dispositif électronique 1 (ou 2).

Le dispositif 1 comporte, reliés par un bus de communication : un processeur ou CPU (*Central Processing Unit*) 201 ; une mémoire vive RAM (*Random Access Memory*) 202 ; une mémoire morte ROM *(Read Only Memory*) 203 ; possiblement une unité de stockage ou un lecteur de support de stockage, tel qu'un lecteur de cartes SD (*Secure Digital*) ou un disque dur HDD (*Hard Disk Drive*) (non représenté) ; un écran 204, un dispositif de saisie 205 et au moins un module réseau ou interface réseau 206 permettant de connecter le dispositif 1 à un réseau de communication, par exemple un module de type WiFi. Selon un mode de réalisation, l'écran 204 et le module de saisie 205 sont combinés dans un même module, par exemple un écran tactile.

Le processeur 201 est capable d'exécuter des instructions chargées dans la RAM 202 à partir de la ROM 203, d'une mémoire ou support de stockage, interne ou externe, par exemple carte SD ou HHD (non représenté) ou sur un support de stockage distant accessible par un réseau de communication via l'interface réseau 206. Lorsque le dispositif électronique 1 est mis sous tension, le processeur 201 est capable de lire dans la RAM 202 des instructions et de les exécuter. Ces instructions forment un programme d'ordinateur permettant la mise en oeuvre ou l'exécution, par le processeur 201, de tout ou partie des modules, algorithmes et étapes décrits dans la présente invention.

Ainsi, tout ou partie des modules, algorithmes et étapes décrits dans la présente invention peut être implémenté sous forme logicielle par exécution d'un ensemble d'instructions par une machine programmable, tel qu'un DSP (*Digital Signal Processor*) ou un microcontrôleur. Tout ou partie des modules, algorithmes et étapes décrits ci-après peut aussi être implémenté sous forme matérielle par une machine ou un composant dédié, tel qu'un FPGA (*Field-Programmable Gate Array*) ou un ASIC (*Application-Specific Integrated Circuit*).

Selon un mode de réalisation, la programmation du système domotique est décrite dans un fichier, dit fichier de configuration ou de programmation du système domotique, par exemple au format XML *(Extensible Markup Language* ou langage à balise extensible) ou JSON (*JavaScript Object Notation,* décrit par le *Request for Comments* de référence 7159 de l'*Internet Engineering Task Force*). Ce fichier est enregistré ou sauvegardé sur un support de stockage accessible par le serveur 10, typiquement sur un disque dur ou une mémoire de stockage, par exemple compris dans ce même serveur 10, et est interprété par le serveur 10 afin d'exécuter la programmation telle que définie par un utilisateur. Dit autrement, le serveur 10 interprète le fichier de configuration pour déterminer les messages d'instructions ou commandes à envoyer aux objets connectés. Le fichier de configuration peut comprendre plusieurs sections ou éléments, chaque section correspondant à un élément de la configuration du système de domotique utilisé pour sa programmation.

Selon un mode de réalisation, le fichier de configuration comprend les éléments ou sections suivants :
- un ou plusieurs premiers éléments, dits éléments « *action* », chaque premier élément comprenant une liste d'objets connectés destinés à être pilotés par la programmation du système domotique, chaque objet connecté étant associé à une commande,
- un ou plusieurs deuxièmes éléments, dits éléments « *moment* », chaque deuxième élément correspondant à l'association d'un ou plusieurs premiers éléments avec une information de nommage,
- un ou plusieurs troisièmes éléments, dits éléments « *rendez*-*vous* », chaque troisième élément correspondant à l'association d'un deuxième élément avec une information temporelle permettant l'exécution des commandes comprises dans les premiers éléments associés à ce même deuxième élément,

- un ou plusieurs quatrièmes éléments, dits éléments « *programme* », chaque quatrième élément comprenant une liste de un ou plusieurs troisièmes éléments répartis sur une période temporelle, et,
- un ou plusieurs cinquièmes éléments, dits éléments « *events* », chaque cinquième élément comprenant une liste d'au moins un quatrième élément, chaque quatrième élément étant associé à une information temporelle permettant de déterminer l'exécution des commandes.

La première section, dite section ou élément « action » (ou « *action group »),* peut comprendre une liste d'objets connectés destinés à être pilotés par la programmation du système domotique. Ainsi, si la programmation du système domotique a vocation à piloter les radiateurs 41, 42 et 43, ces objets connectés sont compris dans une liste d'une section « *action group* ». Au sein d'une section « *action group* », une commande est associée à chaque objet connecté, une commande correspond à une instruction destinée à un objet connecté, la commande ou instruction permet de définir un état de fonctionnement de l'objet connecté. Plusieurs sections *« action group* » peuvent coexister, un même objet connecté peut être présent dans plusieurs « *action groups* ». Ainsi, par exemple, trois exemples d'« *action group »* sont donnés en illustration :

### « action group » 1 :

- radiateur 41, commande : température = 19°C,
- radiateur 42, commande : éteint,
- radiateur 43, commande : température = 19°C,
- luminaire 21, commande : éteint,
- luminaire 22, commande : éteint,
et « *action group* » 2 :
- radiateur 41, commande : température = 21°C,
- radiateur 42, commande : température = 23°C,
- radiateur 43, commande : température = 21°C,
- luminaire 21, commande : allumé,
- luminaire 22, commande : allumé,
et « *action group* » 3 :
- volet électriques 31, 32 et 33, commande : ouverts.

Le premier élément « *action group* » 1 correspond aux radiateurs 41 et 43 réglés à une température de 19°C, le radiateur 42 éteint et aux luminaires 21 et 22 éteints.

Le deuxième élément « *action group* » 2 correspond aux radiateurs 41 et 43 réglés à une température de 21°C, le radiateur 42 réglé à une température de 23°C et aux luminaires 21 et 22 allumés.

Le troisième élément « *action group* » 3 correspond aux trois volets électriques 31, 32 et 33 ouverts.

La deuxième section, dite section ou élément « *moment* », correspond à l'association d'un ou plusieurs éléments dits « *action group* » précédemment décrits avec une information de nommage. Dit autrement, un « *moment* » correspond à un ou plusieurs « *action group* », regroupés, et au(x)quel(s) un nom est attribué. Ainsi, par exemple, un « *moment* » nommé « *réveil* » peut correspondre au regroupement des deux « *action group* » 2 et 3. De façon complémentaire, un élément « *moment* » peut aussi comprendre directement une liste d'objets connectés, chaque objet connecté étant associé à une commande, sans que les objets connectés ne soient regroupés dans un ou plusieurs « *action group ».*

La troisième section, dite section ou élément « *rendez*-*vous* », correspond à l'association d'un élément « *moment* » précédemment décrit avec une information temporelle permettant l'exécution des commandes comprises dans les « *action groups* » regroupés dans ce même « *moment* ». Par exemple, un « *rendez-vous* » peut correspondre à l'association d'un « *moment* » avec un horaire, typiquement, le *« moment » « réveil* » précédemment décrit en association avec un horaire « *06h30 ».* Dit autrement, un « *rendez-vous* » correspond à l'association d'un « *moment* » avec une heure de déclenchement, c'est-à-dire d'envoi des commandes définies dans les *« action groups* » aux objets connectés correspondants. De façon complémentaire, un élément « *rendez-vous* » peut aussi comprendre directement une liste d'objets connectés, chaque objet connecté étant associé à une commande, sans que les objets connectés ne soient regroupés dans un ou plusieurs « *action group ».*

La quatrième section, dite section ou élément « *programme* », décrit une programmation du système domotique sur une période temporelle type, par exemple une journée, une fin de semaine, une semaine ou un mois. Par programmation sur une période temporelle type, on entend une liste d'un ou plusieurs « *rendez-vous* » répartis sur cette période type. Il est ainsi possible de définir des « *programmes* », par exemple un *« programme »* appelé « *semaine de travail* » ou « *semaine de congés »,* comprenant pour chaque journée de ces semaines types une liste de « *rendez*-*vous* ». Il est de même possible de définir un élément « *event* » appelé « *journée* », cet élément « *journée* » définissant une journée type et comprenant pour cette journée type une liste de « *rendez*-*vous ».*

La cinquième section, dite section ou élément « *évènement* » (ou « *events »)* définit la fréquence d'exécution des « *programmes* » précédemment décrits. Dit autrement, cette section « *events* » décrit comment les « *programmes* » définis doivent être appliqués dans le temps. Selon un mode de réalisation, chaque « *event »* comprend une liste d'au moins un « *programme* », chaque « *programme* » est associé par exemple à une date de départ, un nombre ou une fréquence d'exécution. Ainsi, il est possible de définir un « *event* » comprenant le programme « *semaine de travail »* avec une fréquence de répétition hebdomadaire, bihebdomadaire, mensuelle, etc. Ainsi, la programmation définie pour une semaine de travail type (c'est-à-dire le programme « *semaine de travail* ») sera répété par exemple toutes les semaines, toutes les deux semaines ou une fois par mois. De même, il est possible de définir dans la section « *event* » des semaines particulières comme étant associées au programme *« semaine de congés* ». Il est ainsi possible de définir une première semaine type *« travail* - *enfants à la maison* » et une deuxième semaine type « *travail - sans enfant* », et de programmer ces semaines types en alternance, chaque semaine type étant définie une semaine sur deux. Dit autrement, chacune de ces deux semaines est répétée une semaine sur deux, en alternance.

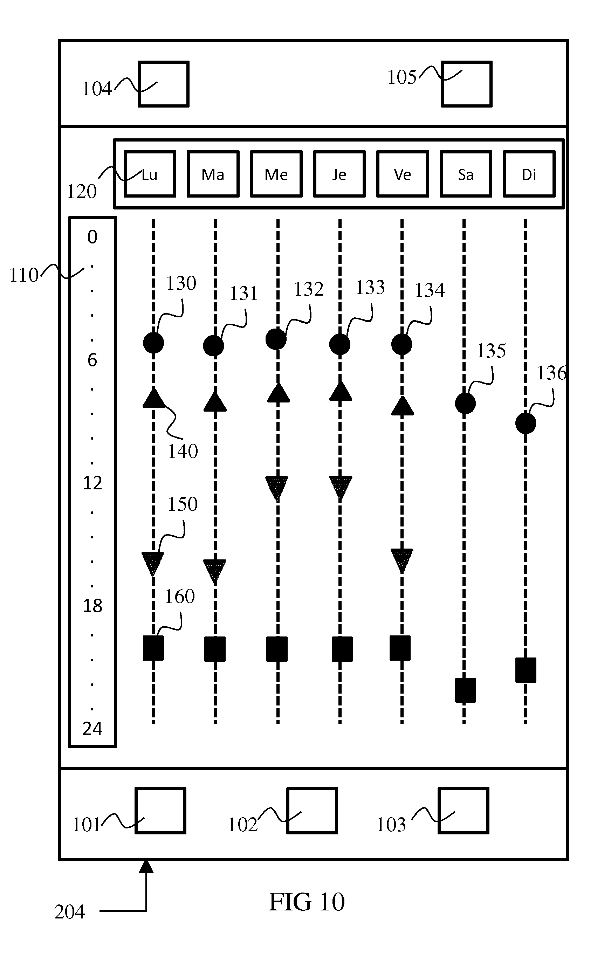

La **FIG. 10** illustre schématiquement un exemple d'interface graphique d'une application de pilotage d'un système de domotique, plus précisément une interface graphique de visualisation de la programmation d'un système domotique. Selon un mode de réalisation, la FIG. 10 représente une interface graphique permettant de visualiser la programmation d'un système de domotique telle que définie par un fichier de configuration, le fichier de configuration étant conforme à un fichier de configuration tel que décrit précédemment. La visualisation ici illustrée en FIG. 10 porte sur une période de temps d'une semaine, mais il est possible de visualiser d'autres périodes de temps. Ainsi, la visualisation peut porter sur une période de temps d'une ou plusieurs semaines, ce qui permet à l'utilisateur de mieux visualiser et d'appréhender un cycle de programmation du système domotique construit sur l'alternance de plusieurs semaines types. Cette interface graphique est celle qui peut être représentée sur un écran 204 d'un dispositif électronique tel les dispositifs électroniques 1 ou 2, l'écran 204 pouvant être tactile. Les objets 104, 105, 101, 102 et 103 représentent des icônes de l'interface graphique, une action d'un utilisateur détectée sur un de ces icônes pouvant déclencher une action préalablement associée audit icône. Les bandeaux 110 et 120 correspondent respectivement à la légende de l'axe vertical et horizontal de la visualisation ci-après décrite. Le bandeau 110 correspond aux différentes heures d'une journée, ici de 00h00 à 24h00. Le bandeau 120 correspond aux sept jours d'une semaine (ici chaque jour est représenté par les deux premières initiales du jour). Les éléments 130 à 136, 140, 150 et 160 représentent ici des « *rendez-vous* » précédemment décrits. On note que les éléments 130 à 136 correspondent à un même « *moment* » planifié sur différents jours à différents horaires. Le « *moment* » correspondant aux éléments « *rendez-vous* » 130 à 136 correspond par exemple au « *moment » « réveil* » précédemment décrit. D'autres éléments « *rendez-vous* » 140, 150 ou 160 sont aussi représentés, planifiés sur la même journée (ici le lundi) que le « *rendez-vous* » 130.

Le dispositif électronique 1 peut recevoir du serveur 10 le fichier de configuration du système domotique et, à partir de ce fichier, déterminer une interface graphique affichée ou présentée sur l'écran 204.

Le serveur 10 peut envoyer le fichier de configuration de façon automatique, soit selon une certaine périodicité ou fréquence, soit après un évènement précis (par exemple suite à une modification du fichier de configuration).

Le serveur 10 peut aussi envoyer le fichier de configuration sur requête du dispositif électronique 1, le dispositif électronique 1 envoyant alors préalablement au serveur 10 un message comprenant ladite requête de demande du fichier de configuration.

Le serveur 10 peut envoyer la totalité du fichier de configuration ou seulement certaines parties du fichier de configuration, par exemple seules les parties modifiées depuis un précédent envoi au même dispositif électronique 1.

L'utilisateur a la possibilité, via une interaction sur le dispositif de saisie 205, de basculer dans un mode de modification de la programmation du système domotique représentée par l'interface graphique illustrée en FIG. 10 et présentée sur l'écran 204. Ainsi, le dispositif électronique 1 peut recevoir sur le dispositif de saisie 205 au moins une action d'un utilisateur pour faire basculer l'interface graphique dans un mode de modification de la programmation du système domotique. Typiquement, une interaction de l'utilisateur avec une icône de la FIG. 10, par exemple l'icône 105, permet de basculer vers le mode de modification de la programmation du système domotique.

La **FIG. 3** illustre schématiquement un organigramme décrivant un mode de réalisation du procédé pour modifier la programmation d'un système domotique, plus particulièrement une vue d'ensemble d'une interface graphique d'une application de pilotage d'un système domotique.

Une première étape 301 correspond démarrage sur le dispositif électronique 1 d'une application de pilotage du système domotique. L'application peut être préinstallée sur le dispositif électronique 1 ou avoir été téléchargée, par exemple après avoir été récupérée sur un portail applicatif de type *App Store™* ou *Google Play™.* L'étape 301 peut comprendre des étapes de connexion ou d'association du dispositif électronique 1 avec le serveur 10. L'étape 301 peut comprendre des étapes de récupération d'un fichier de configuration du système domotique, par exemple en provenance du serveur 10.

Dans une étape 302, le processeur 201 exécute l'application pour permettre en particulier la visualisation de la programmation du système domotique, telle qu'illustrée dans le FIG. 10 précédemment décrite.

Dans une étape 303, le processeur 201 détermine si l'utilisateur choisit de basculer dans un mode de programmation du système domotique. Le basculement de l'interface graphique dans un mode de modification de la programmation du système domotique peut se faire lorsque le processeur 201 détecte ou reçoit du dispositif de saisie 205 au moins une action d'un utilisateur qui sélectionne par exemple l'icône 105 correspondant à l'action sur l'interface graphique affichée sur l'écran 204 et illustrée en FIG. 10.

S'il l'utilisateur ne désire pas modifier la programmation du système domotique, l'utilisateur peut dans des étapes 304 ou 305, le processeur 201 peut détecter une action de l'utilisateur pour obtenir une représentation sur l'interface graphique de la programmation d'autres éléments, par exemple une *« journée* » ou un « *rendez-vous ».*

Si le processeur 201 détecte une sélection de modification de la programmation du système domotique, le processeur 201 commande l'interface graphique pour proposer le choix de la modification d'un élément « *event* » de type semaine (étape 310), de type *« journée »* (étape 320) ou par exemple d'un « *rendez-vous* » (étape 330).

La modification de la programmation du système domotique peut comprendre des actions de modification d'éléments existants de la programmation mais aussi des actions de création de nouveaux éléments de la programmation ou de suppression d'éléments existants.

Si le processeur 201 détecte une sélection de modification de la programmation d'éléments « *event* » de type semaine, le processeur 201 commande l'interface graphique pour proposer à l'utilisateur la création d'un nouvel élément de la programmation, le nouvel élément étant créé à partir de la copie d'un élément existant.

Ainsi, le processeur 201 commande l'interface graphique pour générer une invitation à créer le nouvel élément de la programmation à partir d'un élément existant de la programmation, chaque élément de la programmation étant associé à des données de configuration, chaque donnée de configuration pouvant être associée à une valeur. Si le processeur 201 détecte la validation de l'option, le processeur 201 créé le nouvel élément de la programmation en reprenant des données de configuration associées à l'élément existant, ainsi que la valeur correspondante, et en commandant l'interface graphique pour présenter les données de configuration associées au nouvel élément. L'interface graphique permet de modifier les valeurs des données de configuration issues de l'élément existant et de saisir les valeurs des données de configuration du nouvel élément non issues de l'élément existant. Dit autrement, au lieu de devoir créer un nouvel élément à partir de zéro, toutes ou certaines données de configuration correspondant au nouvel élément sont pré-remplies en utilisant les valeurs des données de configuration correspondantes d'un élément existant. Ainsi l'utilisateur n'a pas à ressaisir toutes les valeurs des données de configuration d'un élément de la programmation. Ceci est un gain de temps, mais aussi une aide certaine à la programmation d'un élément car cela évite à un utilisateur de devoir recommencer à zéro la création d'un élément, particulièrement si certaines données de configuration sont compliquées à appréhender. L'utilisateur peut alors, pour ces données, reprendre la configuration d'un élément déjà existant.

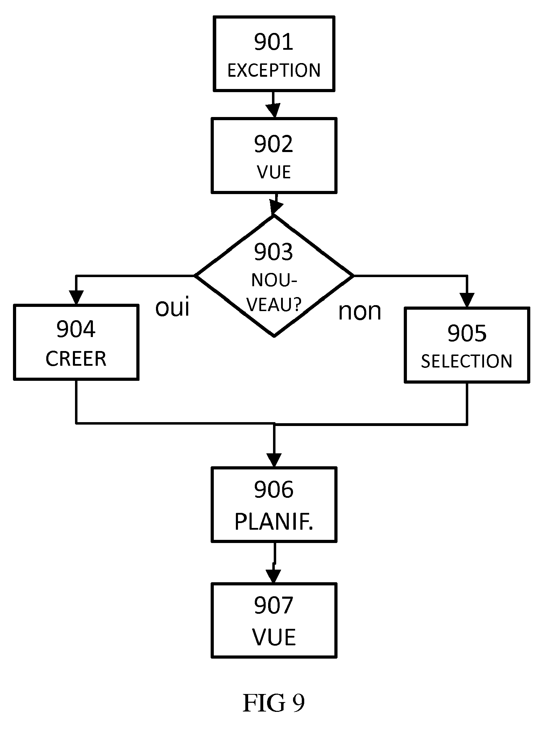

Dans une étape 312, le processeur 201 détecte si l'utilisateur souhaite gérer les exceptions à la programmation; ceci est plus particulièrement décrit lors de la description de la FIG. 9 ci-après.

Dans une étape 320, similaire dans sa philosophie à l'étape 310, le processeur 201 détecte si l'utilisateur souhaite modifier la configuration de la programmation d'un élément *« journée* » plutôt que d'un élément « *semaine* ». Contrairement à la modification de la programmation d'une semaine (étapes 310, 311 et 312), la modification de la programmation d'une *« journée* » ne comprend pas d'étape dite d'exception, les exceptions étant gérées au niveau de la semaine. Selon un mode de réalisation, il est possible d'introduire des exceptions dans un élément « *journée* », par exemple en définissant une plage horaire où la programmation de la journée serait modifiée pour correspondre par exemple à une période type prédéfinie.

Les étapes 330, 331, 332 et 333 correspondent à la modification de la programmation d'un « *rendez*-*vous* ». Il est ici illustré qu'il est possible de modifier, supprimer ou copier un « *rendez*-*vous* », la copie d'un « *rendez-vous* » permettant la création d'un nouveau « *rendez-vous* » reprenant, partiellement ou non, les données de configuration du « *rendez-vous* » copié, de la même manière que pour la création d'une nouvelle « *semaine* » à partir d'une semaine existante.

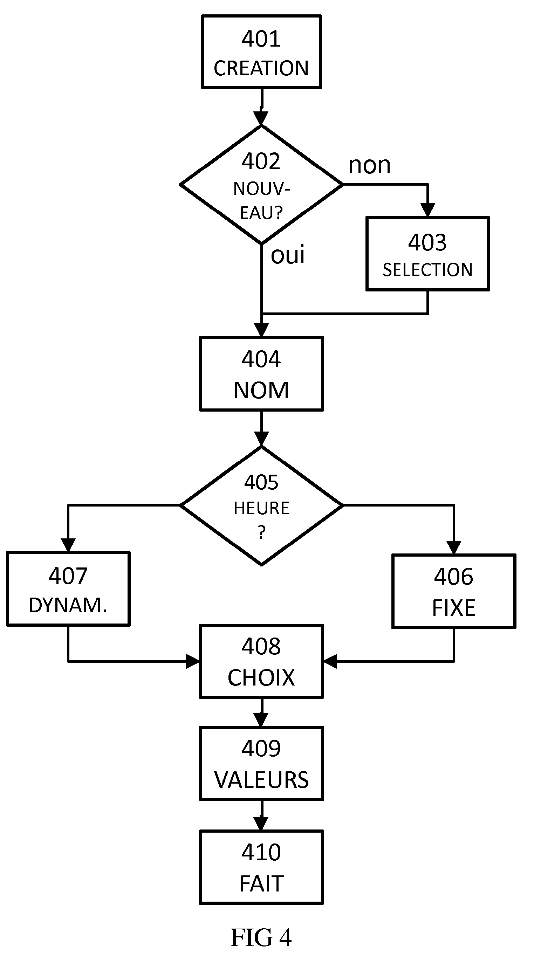

La **FIG. 4** illustre schématiquement un organigramme décrivant un mode de réalisation du procédé pour modifier la programmation d'un système domotique, plus particulièrement les étapes de création d'un élément de programmation d'un système domotique.

La FIG. 4 illustre en particulier la création d'un nouvel élément de type *« rendez*-*vous* », possiblement à partir d'un « *rendez-vous* » existant.

A l'étape 401, le processeur 201 détecte si une option de création d'un nouveau *« rendez*-*vous* » est sélectionnée par l'utilisateur, par exemple lors des étapes 311, 321 ou 333.

Si l'utilisateur choisit cette option, par exemple en sélectionnant l'icône correspondant à l'option dans l'interface graphique, alors, dans une étape 402, le processeur 201 commande la présentation sur l'interface graphique d'une option permettant de créer un nouvel élément de la programmation à partir d'un élément existant de la programmation, chaque élément de la programmation étant associé à des données de configuration.

Si l'utilisateur choisit cette option, alors, dans une étape 403, le processeur 201 commande la présentation sur l'interface graphique d'une liste d'éléments existants, c'est-à-dire des « *rendez-vous* » précédemment configurés, l'utilisateur devant sélectionner parmi ces éléments lequel sera repris pour la création du nouvel élément. Une fois l'élément sélectionné par l'utilisateur, le processeur 201 retrouve les données de configuration de cet élément et pré-remplit les données de configuration du nouvel élément avec ces données. Dit autrement, le processeur 201 copie certaines ou toutes les données de configuration de l'élément sélectionné et utilise ces données pour la création du nouvel élément. L'utilisateur peut alors modifier les valeurs des données de configuration issues de l'élément existant et saisir les valeurs des données de configuration du nouvel élément non issues de l'élément existant. Si l'utilisateur ne souhaite pas utiliser un élément existant pour la création du nouvel élément, le processeur 201 n'exécute pas l'étape de sélection 403 et passe à l'étape 404, les valeurs des données de configuration du nouvel élément n'étant alors pas pré-remplies.

Selon un mode de réalisation, les données de configuration d'un nouvel élément, en l'absence de choix de l'utilisateur de réutiliser les valeurs des données de configuration d'un élément sélectionné, possèdent des valeurs par défaut. Ces valeurs par défaut sont possiblement configurables par l'utilisateur via une option de l'interface graphique.

Dans l'étape 404, le processeur 201 commande l'interface graphique pour inviter l'utilisateur à nommer le nouveau « *rendez-vous* ». Dans une étape 405, le processeur 201 présente sur l'interface graphique une option de configuration d'une information temporelle. Cette information temporelle peut être un horaire ou une information permettant l'exécution des commandes associées au « *rendez*-*vous* ». Dit autrement, l'information temporelle permet de déterminer un moment d'envoi des commandes aux objets connectés. A l'étape 406, le processeur 201 commande l'interface graphique pour permettre à l'utilisateur de définir un horaire de déclenchement du « *rendez*-*vous* », c'est-à-dire une heure fixe de déclenchement. A l'étape 406, le processeur 201 commande l'interface graphique pour permettre à l'utilisateur de définir le déclenchement du « *rendez-vous* » de manière dynamique, par exemple en dépendant d'un paramètre externe. Ainsi, plutôt que de fixer le déclenchement du « *rendez-vous* » à une heure fixe, par exemple 6h30 le matin, l'utilisateur peut décider de lier le déclenchement à un événement du type « heure de lever du soleil + 30 minutes », possiblement en y associant des contraintes du type «jamais avant 6h15 » ou «jamais après 7h30 ». Dans ce cas, le dispositif électronique 1 ou le serveur 10 dispose d'un fichier donnant des informations du type « heure de lever » ou « heure de coucher » du soleil pour chaque jour. Une fois l'horaire de déclenchement (étape 406) ou l'information permettant le déclenchement (étape 407) du « *rendez-vous* » fixé, le processeur 201 commande l'interface graphique pour inviter l'utilisateur à choisir lors d'une étape 408 les objets connectés qui seront commandés par ce « *rendez*-*vous* ». Si l'utilisateur a fait le choix lors de l'étape 402 de l'utilisation d'un « *rendez-vous* » existant, alors le choix des objets connectés est pré-rempli et correspond aux objets connectés du « *rendez-vous* » existant sélectionné lors de l'étape 403. Sinon, le processeur 201 présente sur son interface graphique une liste des objets connectés disponibles, l'utilisateur peut sélectionner dans cette liste le ou les objets connectés à associer au « *rendez*-*vous ».*

Possiblement, des « *action group* » sont aussi affichées dans la liste, permettant à l'utilisateur de choisir un groupe d'objets connectés préalablement constitué. Possiblement, l'utilisateur peut constituer lors de cette étape des groupes ou « *action group* » d'objets connectés. Dans le cas où la liste des objets connectés est pré-remplie, l'utilisateur peut modifier cette liste en supprimant ou en ajoutant des objets connectés.

A l'étape 409, le processeur 201 commande l'interface graphique pour inviter l'utilisateur à associer à chaque objet connecté sélectionné lors de l'étape précédente 408 une commande. Plus précisément, s'agissant d'un objet connecté qui est issu d'un pré-remplissage (étape 403), l'utilisateur se voit offrir la possibilité de modifier la commande déjà associée à l'objet connecté.

Si l'objet connecté est nouveau, c'est-à-dire associé au nouveau « *rendez-vous »* après sélection lors de l'étape 408, une commande doit être sélectionnée par l'utilisateur. Dans une étape 410, le processeur 201 enregistre le nouveau « *rendez-vous* », c'est-à-dire que le fichier de configuration est mis à jour avec les données de configuration de ce nouveau « *rendez*-*vous* ». Possiblement, le fichier de configuration mis à jour est ensuite envoyé au serveur 10.

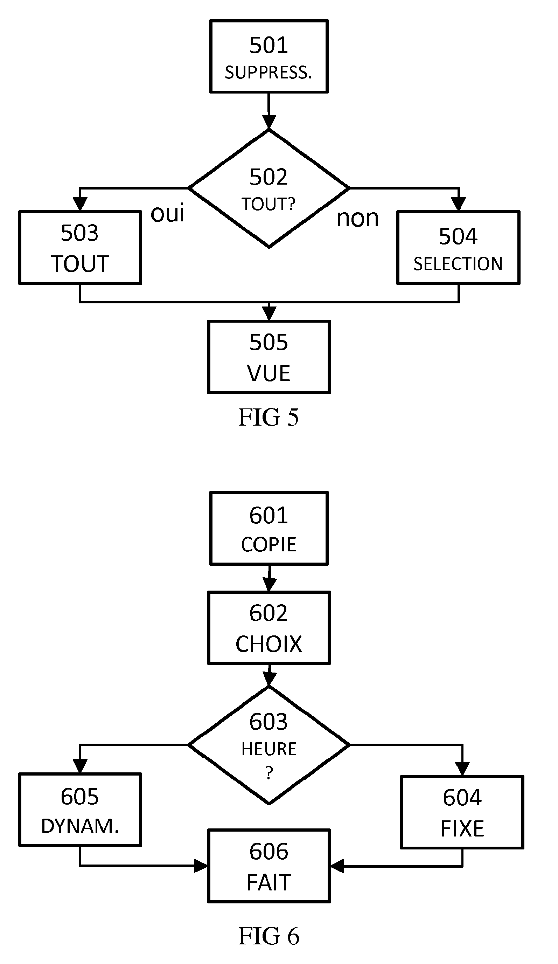

La **FIG. 5** illustre schématiquement un organigramme décrivant un mode de réalisation du procédé pour modifier la programmation d'un système domotique, plus particulièrement les étapes de suppression d'un élément de programmation d'un système domotique.

La FIG. 5 peut illustrer plus particulièrement un exemple de procédé de suppression de « *rendez-vous* » dans une journée, par exemple tel que proposé lors de l'étape 332 de la FIG. 3.

Partant d'une situation où le dispositif électronique 1 présente sur son interface graphique une vue des différents *« rendez*-*vous* » d'une journée, le processeur 201 commande l'interface graphique pour proposer une option de suppression d'un ou plusieurs « *rendez-vous* » via par exemple une icône associée à cette action de suppression. Dans une étape 501, le processeur 201 détecte une sélection de l'icône de suppression par l'utilisateur. Le processeur 201 commande l'interface graphique pour une présentation, dans une étape 502, d'un menu à l'utilisateur lui permettant de sélectionner les différents « *rendez-vous* » de la journée qu'il souhaite supprimer. Une option (étape 503) lui permet de supprimer tous les « *rendez-vous* » d'un coup. L'utilisateur peut aussi choisir seulement certains « *rendez-vous* » (étape 504). Une fois les suppressions faites, le processeur 201 présente de nouveau une vue de la journée, les « *rendez*-*vous* » supprimés en moins (étape 505). Les modifications apportées à la programmation sont enregistrées dans le fichier de configuration.

La **FIG. 6** illustre schématiquement un organigramme décrivant un mode de réalisation du procédé pour modifier la programmation d'un système domotique, plus particulièrement les étapes de copie d'un élément de programmation d'un système domotique.

Plus particulièrement, la FIG. 6 illustre le procédé de copie d'un « *rendez-vous* », par exemple tel que proposé lors de l'étape 333 de la FIG. 3. Ainsi, par exemple, partant de la situation décrite en FIG. 10, l'utilisateur peut vouloir créer un nouveau « *rendez-vous* ». Le processeur 201 peut pour cela utiliser le procédé illustré en FIG. 4. Mais partant de l'interface graphique telle que décrite lors de l'étape 305, c'est-à-dire une représentation d'un « *rendez-vous* » donné d'une journée donnée, le processeur 201 peut utiliser le procédé illustré en FIG. 6 pour créer un nouveau *« rendez-vous* », c'est-à-dire via une option de copie du « *rendez-vous* » affiché en 305.

Le processeur 201 présente ainsi, dans l'interface graphique affichée en FIG. 3, étape 305, une option de copie du « *rendez*-*vous* » affiché, par exemple via une icône sélectionnable par l'utilisateur. Si le processeur 201 détecte que cette icône est sélectionnée par l'utilisateur dans une étape 601, le processeur 201 commande la présentation, dans une étape 602, d'une liste des journées pour copier ce moment. Possiblement, seules les journées où ce même « *rendez-vous* » n'existe pas déjà sont présentées sur l'interface graphique. L'utilisateur peut alors sélectionner les journées où il désire copier le « *rendez-vous ».* Le processeur 201 peut optionnellement commander, à l'étape 603, l'interface graphique pour proposer la modification de l'horaire de déclenchement du « *rendez*-*vous* ». L'utilisateur peut opter pour un déclenchement à horaire fixe (voir FIG. 4, étape 406) ou selon une information de déclenchement (voir FIG. 4, étape 407). Une fois ce choix fait, le processeur 201 enregistre les nouveaux « *rendez-vous* » dans le fichier de configuration dans les sections concernant les journées sélectionnées lors de l'étape 602.

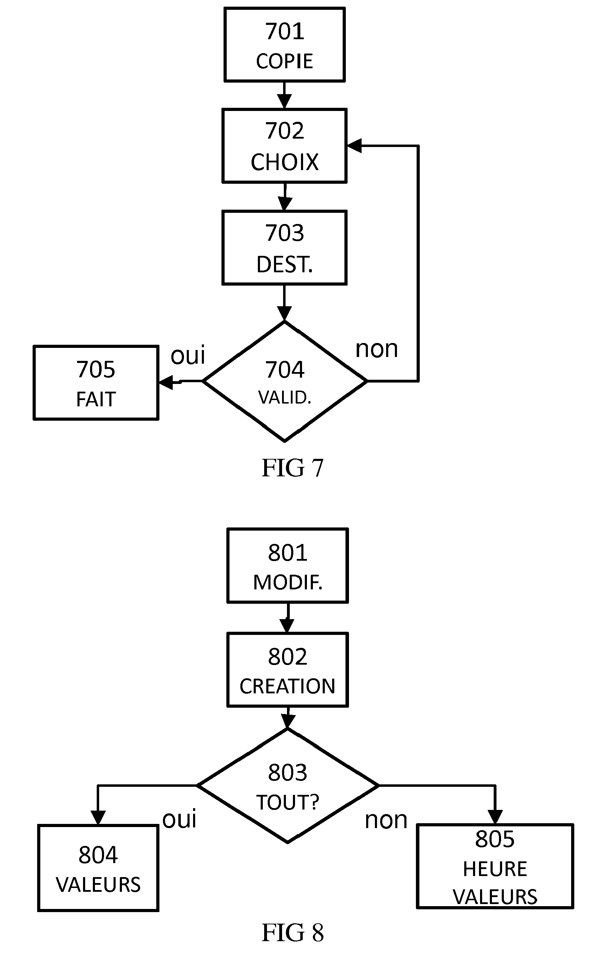

La **FIG. 7** illustre schématiquement un organigramme décrivant un mode de réalisation alternatif du procédé pour modifier la programmation d'un système domotique, plus particulièrement les étapes de copie d'un élément de programmation de type *« journée* » d'un système domotique.

Partant d'une situation où le dispositif électronique 1 présente sur son interface graphique une semaine telle qu'illustrée en FIG. 10, une option de copie d'une journée peut être affichée, par exemple via une icône associée à l'action de copie de la journée. Si le processeur 201 détecte la sélection par l'utilisateur de l'option de copie d'une journée (étape 701), le processeur 201 commande l'interface graphique pour afficher un premier menu permettant à l'utilisateur de sélectionner la journée à copier (étape 702). Une fois la journée à copier sélectionnée, le processeur 201 retrouve dans le fichier de configuration les données de configuration associées à cette journée, en particulier les différents « *rendez-vous* » associés à cette journée sélectionnée. Le processeur 201 commande l'interface graphique pour la présentation dans une étape 703 d'un deuxième menu permettant à l'utilisateur de choisir les journées destinataires, c'est-à-dire les journées pour lesquelles les données de configuration seront potentiellement remplacées par les données de configuration de la journée sélectionnée lors de l'étape 702.

Une fois le choix des journées destinataires fait, le processeur 201 commande l'interface graphique pour une présentation d'un menu de validation (étape 704), lequel menu de validation affiche un message à destination de l'utilisateur le prévenant que la configuration des journées destinataires sera effacée et remplacée par celle de la journée « copiée », c'est-à-dire choisie lors de l'étape 702. Si l'utilisateur valide le choix, alors les valeurs des données de configuration des journées sélectionnées lors de l'étape 703 sont remplacées par les valeurs des données de configuration de la journée copiée, c'est-à-dire sélectionnée lors de l'étape 702. Si non, le processeur 201 commande l'interface graphique pour une présentation de nouveau du menu de l'étape 702. Les différents menus présentés peuvent posséder des options d'annulation de la copie en cours, permettant de sortir du procédé illustré en FIG. 7 sans qu'aucune modification ne soit finalement effectuée.

**La** **FIG. 8** illustre schématiquement un organigramme décrivant un mode de réalisation du procédé pour modifier la programmation d'un système domotique, plus particulièrement les étapes de modification d'un élément de programmation d'un système domotique de type « *rendez*-*vous* », par exemple tel que proposé lors de l'étape 331 de la FIG. 3.

Ainsi, partant de la situation décrite dans l'étape 331 de la FIG. 3, l'interface graphique présentée par le dispositif électronique 1 sur son écran 204 propose la modification d'un « *rendez-vous* » sélectionné par l'utilisateur, par exemple le *« rendez-vous* » 131, correspondant à un « *rendez-vous » « réveil* » planifié le mardi matin.

A l'étape 801 le processeur 201 détecte d'une action de l'utilisateur sur une icône présentée sur l'interface graphique et associée à l'action de modification. Le processeur 201 commande l'interface graphique pour présenter alors dans une étape 802 une interface similaire à celle présentée lors de la création d'un « *rendez*-*vous »,* les données de configuration affichées étant celle correspondant au « *rendez-vous* » 131 à modifier. L'utilisateur peut sélectionner parmi les données de configuration celles qu'il veut modifier, et y associer de nouvelles valeurs. Les données modifiables sont par exemple le nom associé au « *rendez-vous* », l'heure de déclenchement ou l'information permettant le déclenchement du « *rendez-vous* », la liste des objets connectés ou des « *action group* » associés, les commandes associées à ces objets connectés, etc. Une fois les modifications effectuées par l'utilisateur, dans une étape 803, le processeur 201 commande l'interface graphique pour présenter un menu demandant à l'utilisateur s'il souhaite appliquer les modifications effectuées sur le seul « *rendez-vous » « réveil* » 131 du mardi matin (celui qui a été sélectionné pour modification lors de l'étape 801) ou sur tous les « *rendez-vous » « réveil* » 130 à 136. Si l'utilisateur fait le choix de ne modifier que le seul « *rendez-vous* » 131, alors, dans une étape 805, le processeur 201 enregistre toutes les valeurs des données de configuration modifiées par l'utilisateur lors de l'étape 802 en association avec le *« rendez-vous* » modifié, c'est-à-dire ici le « *rendez-vous* » 131. Si l'utilisateur fait le choix de répercuter les modifications effectuées lors de l'étape 802 sur tous les *« rendez-vous » « réveil* », alors, dans une étape 804 :
- le processeur 201 modifie toutes les valeurs des données de configuration de tous les « *rendez-vous* » « *réveil »* 130 à 136 conformément aux modifications faites lors de l'étape 802, à l'exception toutefois des éventuelles modifications faites sur la valeur de la donnée de configuration correspondant à l'information temporelle (heure ou information de déclenchement),
- les éventuelles modifications faites sur la valeur de la donnée de configuration correspondant à l'information temporelle (heure ou information de déclenchement) lors de l'étape 802 ne sont faites ou répercutées que sur le seul « *rendez*-*vous » « réveil* » 131, sélectionné lors de l'étape 801.

Ainsi, la modification peut porter sur des données de configuration communes à tous les « *rendez-vous » « réveil* » d'une semaine (ajout d'un objet connecté à commander, modification d'une commande à envoyer à un objet connecté, etc.) sans que la programmation horaire de chaque « *rendez-vous » « réveil* » de la semaine ne soit modifiée lors de l'opération de modification.

La **FIG. 9** illustre schématiquement un organigramme décrivant un mode de réalisation du procédé pour modifier la programmation d'un système domotique, plus particulièrement les étapes de création d'une exception dans la programmation d'un système domotique.

Par exception, il faut comprendre une journée d'exception au sein d'une semaine normale de programmation. Dit autrement, l'utilisateur a la possibilité pour une ou plusieurs journées sélectionnées de faire en sorte que la programmation normale de cette journée ne soit pas exécutée, mais qu'au contraire une programmation d'exception soit exécutée à la place. Une ou plusieurs journées d'exception type peuvent être préalablement configurées pour une planification aisée de ces journées. Par exemple, un utilisateur peut configurer une journée d'exception type appelée « journée à la maison - malade ». Ainsi, si l'utilisateur (ou quelqu'un de sa famille) ne peut aller travailler et doit rester à la maison, l'utilisateur n'aura pas à modifier la programmation habituelle de son système domotique. Il aura juste à indiquer que la journée concernée est remplacée par une journée d'exception «journée à la maison - malade », et c'est la programmation du système domotique correspondant à cette journée d'exception qui prendra alors le pas sur la programmation de la journée normale, ceci de façon exceptionnelle par rapport à la programmation habituelle.

Ainsi, partant par exemple de l'interface graphique présentée par le dispositif électronique 1 sur son écran 204 illustrée en FIG. 10, une des icônes 101 à 105 peut correspondre à une icône associée à un menu dit « exception ». Alternativement, ou de façon complémentaire, un sous-menu de configuration peut permettre d'accéder à une option de configuration des exceptions comme indiqué à l'étape 312 de la FIG. 3.

Le processeur 201 détecte donc dans une étape 901 que l'utilisateur souhaite accéder au menu de configuration des exceptions, possiblement par la détection d'une action de l'utilisateur sur l'icône correspondante. Le processeur 201 commande l'interface graphique pour présenter dans une étape 902 un calendrier affichant la programmation du système domotique en cours, par exemple avec une interface graphique du type illustrée en FIG. 10, représentant une semaine, ou une interface graphique similaire représentant par exemple une durée de deux semaines, d'un mois ou d'une année. L'utilisateur peut interagir dans une étape 903 avec l'interface graphique présentée, par exemple en sélectionnant une icône affichée sur l'interface graphique, l'icône étant associée avec une action de création d'une nouvelle exception. Lors de cette étape 903, le processeur 201 commande l'interface graphique pour proposer à l'utilisateur le choix entre la création d'une nouvelle journée d'exception type (étape 904) ou au contraire le choix de sélectionner une journée d'exception parmi une liste de journées d'exception types déjà créées (étape 905).

La création d'une journée d'exception type suit un processus similaire à la création d'une journée, une journée étant composée d'une liste de « *rendez-vous »,* c'est-à-dire de « *moments* » planifiés sur cette même journée. Par exemple, l'utilisateur peut avoir préalablement configuré, dans des étapes 904 antérieures, les journées d'exception type « journée à la maison - malade», «jour férié» ou « vacances - absent ». Dans une étape 906, le processeur 201 détecte la sélection par l'utilisateur de la ou les journées pendant laquelle la journée d'exception type doit s'appliquer. On entend par là que la programmation de la journée type sélectionnée prendra le pas sur la programmation habituelle de la ou les journées choisies lors de l'étape 906, c'est-à-dire que la programmation du système domotique pour la ou les journées choisies sera celle d'une journée d'exception, et non celle normalement définie. De façon similaire, il est possible de prévoir des exceptions de type « semaine » ou « mois », portant sur une période de temps du même nom, ou sur toute autre période de temps. Un utilisateur s'absentant régulièrement de son domicile pour assister à des événements durant trois journées peut ainsi définir une période d'exception de trois journées afin de ne pas devoir reprogrammer son système domotique à chaque fois. Il lui suffit alors de sélectionner cette période d'exception de trois journées pour la programmation du système domotique lors de son absence pour chacun de ces évènements.

## Revendications

1. Procédé pour modifier la programmation d'un système de domotique, la programmation du système domotique étant décrite dans un fichier de configuration enregistré sur un serveur (10), lequel serveur (10) pilotant le système de domotique en interprétant ledit fichier de configuration, le procédé pour modifier la programmation du système domotique étant exécuté par un dispositif électronique (1) comprenant un écran (204) et un dispositif de saisie (205), **caractérisé en ce que** le procédé comprend les étapes suivantes :
- recevoir le fichier de configuration,
- présenter sur l'écran (204) une interface graphique permettant de visualiser la programmation du système de domotique telle que définie par le fichier de configuration reçu,
- détecter sur le dispositif de saisie (205) au moins une action d'un utilisateur indiquant que l'interface graphique doit basculer dans un mode de modification de la programmation du système domotique,
- présenter via l'interface graphique une option permettant de créer un nouvel élément de la programmation à partir d'un élément existant de la programmation, chaque élément de la programmation étant associé à des données de configuration,
- détecter la validation de l'option, et,
- créer le nouvel élément de la programmation en reprenant des valeurs des données de configuration associées à l'élément existant et en présentant une interface graphique comprenant les données de configuration associées au nouvel élément, l'interface graphique permettant de :
∘ modifier les valeurs des données de configuration issues de l'élément existant,
∘ saisir les valeurs des données de configuration du nouvel élément non issues de l'élément existant.

2. Procédé selon la revendication précédente, le procédé étant **caractérisé en ce que** l'étape de présentation d'une option permettant de créer un nouvel élément comprend l'affichage d'une liste d'éléments existants.

3. Procédé selon l'une des revendications précédentes, le procédé étant **caractérisé en ce que** le procédé comprend :
- une étape préalable d'envoi d'une requête au serveur (10) pour obtenir le fichier de configuration, et,
- une étape ultérieure d'envoi du fichier de configuration mis à jour au serveur (10).

4. Procédé selon l'une des revendications précédentes, l'étape de présenter sur l'écran (204) une interface graphique permettant de visualiser la programmation du système de domotique telle que définie par le fichier de configuration reçu comprenant une visualisation de la programmation sur une période d'une à plusieurs semaines.

5. Procédé selon l'une des revendications précédentes, les données de configuration d'un élément comprenant une liste d'objets connectés, chaque objet connecté étant associé à une commande, et une information permettant de déterminer un moment d'envoi des commandes aux objets connectés, un élément étant dit *« rendez*-*vous ».*

6. Procédé selon l'une des revendications 1 à 4, les données de configuration d'un élément comprenant une liste d'éléments de type « *rendez-vous »* correspondant à une période de temps, un élément de type « *rendez-vous »* comprenant une liste d'objets connectés, chaque objet connecté étant associé à une commande, et une information permettant de déterminer un moment d'envoi des commandes aux objets connectés.

7. Procédé selon l'une des revendications précédentes, le fichier de configuration comprenant :
- un ou plusieurs premiers éléments, dits éléments action, chaque premier élément comprenant une liste d'objets connectés destinés à être pilotés par la programmation du système domotique, chaque objet connecté étant associé à une commande,
- un ou plusieurs deuxièmes éléments, dits éléments « *moment* », chaque deuxième élément correspondant à l'association d'un ou plusieurs premiers éléments avec une information de nommage,
- un ou plusieurs troisièmes éléments, dits éléments « *rendez*-*vous* », chaque troisième élément correspondant à l'association d'un deuxième élément avec une information temporelle permettant l'exécution des commandes comprises dans les premiers éléments associés à ce même deuxième élément,
- un ou plusieurs quatrièmes éléments, dits éléments « *programme* », chaque quatrième élément comprenant une liste d'un ou plusieurs troisièmes éléments répartis sur une période temporelle, et,
- un ou plusieurs cinquièmes éléments, dits éléments « *events* », chaque cinquième élément comprenant une liste d'au moins un quatrième élément, chaque quatrième élément étant associé à une information temporelle permettant de déterminer l'exécution des commandes.

8. Dispositif électronique (1) comprenant un écran (204) et un dispositif de saisie (205), ainsi que des moyens pour :
- recevoir un fichier de configuration,
- présenter sur l'écran (204) une interface graphique permettant de visualiser la programmation d'un système de domotique telle que définie par le fichier de configuration reçu,
- détecter sur le dispositif de saisie (205) au moins une action d'un utilisateur indiquant que l'interface graphique doit basculer dans un mode de modification de la programmation du système domotique,
- présenter via l'interface graphique une option permettant de créer un nouvel élément de la programmation à partir d'un élément existant de la programmation, chaque élément de la programmation étant associé à des données de configuration,
- détecter la validation de l'option, et,
- créer le nouvel élément de la programmation en reprenant des valeurs des données de configuration associées à l'élément existant et en présentant une interface graphique comprenant les données de configuration associées au nouvel élément, l'interface graphique permettant de :
o modifier les valeurs des données de configuration issues de l'élément existant,
o saisir les valeurs des données de configuration du nouvel élément non issues de l'élément existant.

9. Programme d'ordinateur, **caractérisé en ce qu'**il comprend des instructions pour mettre en oeuvre, par un processeur (201), le procédé selon l'une quelconque des revendications 1 à 7, lorsque ledit programme d'ordinateur est exécuté par ledit processeur (201).

10. Moyens de stockage, **caractérisés en ce qu'**ils comprennent un programme d'ordinateur selon la revendication précédente.
